# Europäisches Patentamt
# European Patent Office
# Office européen des brevets

(19)

(11) Veröffentlichungsnummer: **0 006 548**
**B1**

(12) **EUROPÄISCHE PATENTSCHRIFT**

(21) Anmeldenummer: **79101959.9**

(22) Anmeldetag: **15.06.79**

(51) Int. Cl.³: **A 01 N 59/12,**
**C 08 L 35/08, C 08 L 35/00**

(54) **Verfahren zur Herstellung von Jodkomplexen aus Maleinsäurecopolymeren; Lösungen, die diese Komplexe enthalten.**

(30) Priorität: **24.06.78 DE 2827827**

(43) Veröffentlichungstag der Anmeldung:
**09.01.80 Patentblatt 80/1**

(45) Bekanntmachung des Hinweises auf die Patenterteilung:
**18.02.81 Patentblatt 81/7**

(84) Benannte Vertragsstaaten:
**BE DE FR GB IT**

(56) Entgegenhaltungen:
**GB - A - 824 215**
**GB - A - 1 101 304**

(73) Patentinhaber: **BASF Aktiengesellschaft**
**Carl-Bosch-Strasse 38**
**D-6700 Ludwigshafen (DE)**

(72) Erfinder: **Denzinger, Walter**
**Wormser Landstrasse 65**
**D-6720 Speyer (DE)**
(72) Erfinder: **Schenck, Hans-Uwe, Dr.-Chem.**
**Erlenweg 6**
**D-6706 Wachenheim (DE)**
(72) Erfinder: **Diessel, Paul**
**Franz-Schnabel-Strasse 4**
**D-6800 Mannheim 51 (DE)**

Verfahren zur Herstellung von Jodkomplexen aus Maleinsäurecopolymeren; Lösungen, die diese Komplexe enthalten

Die Erfindung betrifft ein Verfahren zur Herstellung von neuen stabilen Jodkomplexen aus wasserlöslichen Maleinsäurecopolymeren mit einem hohen Gehalt an aktivem Jod und die Herstellung durch Mischen der Maleinsäurecopolymeren, Jod, Jodiden und Wasser bei neidriger Temperatur.

Bestimmte Jodkomplexe — allgemein "Jodophore" genannt — verleihen dem Jod eine gute Wasserlöslichkeit, vermindern seinen Dampfdruck, seine korrosiven Eigenschaften und seine schleimhautreizende Wirkung.

Es sind bereits seit langem Jodophore auf Basis wasserlöslicher Polymerer wie Polyäthylenoxid (D. E. Guttmann, T. Higuchi Journ. of the Pharm. Assoc. XLIV, 668 (1955), Polyvinylalkohol (V.O. Mokhnach, J. P. Zueva Zh. Neorgan. Khim 8, 668 (1963) und Polyvinylpyrrolidon (H. A. Shelanski et al, Journ of the Internat. College of Surgeon, Chicago 25, 727 (1956) bekannt. Diese Jodophore sind zwar gute Desinfektionsmittel, weisen aber keine guten dispergierenden Eigenschaften auf. Ferner sind auch Jodophore auf Tensidbasis bekannt (z.B. US-A-3 028 299), sie sind jedoch wegen ihrer starken Tendenz zum Schäumen als desinfizierendes Reinigungsmittel für viele industrielle Reinigungszwecke ungeeignet.

Die US-A-2 758 049 lehrt Zusammensetzungen aus 10- bis 50-gewichtsprozentigen wäßrigen Lösungen von Acrylosäure, die 1 bis 10 Gewichtsprozent Jod komplex gebunden enthalten. Dies erreicht man durch Mischen der Polyacrylsäure-Lösungen mit der entsprechenden Menge Jod bei 20 bis 40°C innerhalb von 24 Stunden laut den dort beschriebenen Beispielen. Der Nachteil besteht in der geringen Menge an aktivem Jod und in dem recht hohen Zeitaufwand bei der Herstellung der Komplexe.

Das Zeil der Fachwelt, auch höhere Gehalte an aktivem Jod zu erreichen, wurde gemäß DE-A-2 403 225 dadurch zu realisieren versucht, daß man 10 bis 30% elementares Jod und 90 bis 70 Gewichtsprozent einer wäßrigen Polycarbonsäure bei über 50°C vermischte, wobei in der wäßrigen Lösung 7 bis 30 Gewichtsprozent Polycarbonsäure — u.a. auch Polyacrylsäure —, 0 bis 20 Gewichtsprozent Alkalijodid und/oder einwertiger aliphatischer Alkohol, 0 bis 20 Gewichtsprozent einer mehrbasischen Mineralsäure und/oder Oxycarbonsäure anwesend waren.

Aus den Beispielen dieser Literaturstelle ist ersichtlich, daß man die besten Ergebnisse sowohl ohne Alkalijodidzusatz als mit Zusätzen erhält, die prozentual weit unter der prozentualen Menge an freiem Jod liegen. Ein wesentlicher Nachteil dieses Verfahrens besteht darin, daß man höhere Temperaturen, also mehr Energie benötigt, und daß die erhaltenen Lösungen immer noch Anteile enthalten, die vor dem Gebrauch der Lösungen abfiltriert werden müssen.

Gegenstand eines älteren Vorschlags (DE-A-27 10 437) ist ein Verfahren zur Herstellung von Polyacrylsäure-Jodkomplexen durch Vermischen von wäßrigen Lösungen von Polyacrylsäuren mit elementarem Jod und Alkali- oder Ammoniumjodiden, das dadurch gekennzeichnet ist, daß man — bezogen auf das Gesamtgewicht von fester Polyacrylsäure, Jod und Jodidionen — 14 bis 80% einer Polyacrylsäure des K-Wertes 8 bis 60 und 86 bis 20% einer Mischung aus Jod und Jodidionen im Äquivalentverhältnis von 0,2 bis 1,1:1 in einer zur vollständigen Lösung ausreichenden Menge Wasser bei 0 bis 30°C miteinander vereinigt.

Diese Komplex weisen nun die obigen Nachteile nicht mehr auf und sind beliebig lange haltbar. Es hat sich jedoch herausgestellt, daß stärker verdünnte Lösungen der Komplexe, wie sie in allgemeinen zur Anwendung gelangen (Mischungsverhältnisse Jodkomplex zu zusätzlichem Wasser wie 1:20 und mehr) nicht beliebig lange, sonder höchstens mehrere Wochen ohne größere Jodverluste bei Raumtemperatur lagerstabil sind. In der Praxis ist man bestrebt möglichst fertige Zubereitungen zu vertreiben, nicht aber die höher konzentrierten Komplexe, damit dem Endverbraucher der Schritt des Abmischens der Komplexe mit den übrigen Bestandteilen der Zubereitungen erspart wird.

Das Ziel der Erfindung bestand nun darin, Jodkomplexe herzustellen, die alle diese Vorteile bieten, einen hohen Gehalt an aktivem Jod besitzen, und zusätzlich auch in Form ihrer stärker verdünnten Lösungen, als die sie der Verbraucher im allgemeinen verwendet, möglichst über Jahre hinweg nur wenig an aktivem Jod verlieren, wenn sie bei Raumtemperatur gelagert werden.

Die Lösung der Aufgabe besteht erfindungsgemäß darin, daß anstelle der Polyacrylsäure als komplexbildende Polymerisate wasserlösliche Copolymerisate aus Maleinsäure eingestezt werden, wie aus den Patentansprüchen ersichtlich ist.

Aus der GB-A-824 215 sind Jodophore aus Maleinsäureanhydrid-Copolymerisaten und Jod bekannt. Man erhält sie entweder durch trockenes Vermischen von Copolymerisat mit Jod oder durch Vereinigung der Komponenten in wäßriger Lösung. Ausdrücklich weist aber die Literaturstelle darauf hin (Seite 2, Zeilen 28 bis 31), daß beim Arbeiten in flüssigem Medium zur Vervollständigung der Reaktion längere Reaktionszeiten in beachtenswertem Maße erforderlich seien. Im übrigen treten hierbei im wesentlichen dieselben Nachteile auf, wie sie auch beim Arbeiten gemäß der obengenannten US-A-2 758 049 zu Tage treten, nämlich die Tatsache, daß man höchstens 10% an aktivem Jod erhält.

Die Komplexe werden analog den Angaben gemäß DE-A-27 10 437 erhalten.

Die zur Herstellung der erfindungsgemäßen Jodophore geeigneten Copolymerisate sind solche, die im sauren pH-Bereich wasserlöslich sind. Es sind dies Copolymerisate der Maleinsäure mit $C_1$- bis $C_4$-Alkylvinyläthern oder $C_2$- bis $C_3$-$\alpha$-Olefinen, Vorzugsweise werden Copolymerisate mit Methylvinyläther, Äthylvinyläther, Äthylen und Propylen eingesetzt, wobei Propylen besonders bevorzugt ist.

Die zur Herstellung der Jodophore notwendigen Maleinsäurecopolymerisate sollen wie die Polymerisate gemäß DE-A-27 10 437 K-Werte von 8 bis 60, vorzugsweise 10 bis 50 aufweisen. Die K-Werte werden nach H. Fikentscher, Cellulosechemie 13, Seiten 58 bis 64 und 71 bis 74 (1932), in 1-prozentigen wäßrigen Lösungen bei 25°C gemessen, dabei bedeutet $K = k \cdot 10^3$.

Die Copolymerisate werden üblicherweise durch Copolymerisation des Maleinsäureanhydrids mit dem entsprechenden Copolymeren in Gegenwart radikalbildender Initiatoren nach bekannten Verfahren im Molverhältnis 1:1 hergestellt und anschließend durch Hydrolyse in wäßrige Lösungen überführt.

Für die Herstellung der Jodophorlösungen geht man im allgemeinen von 20- bis 60 prozentigen wäßrigen Lösungen der Copolymerisate aus, die in einer Menge (als Feststoff) von 14 bis 80 Gewichtsprozent, vorzugsweise 20 bis 50 Gewichtsprozent — bezogen auf das Gesamtgewicht an festen Copolymeren, Jod und Jodidionen — eingesetzt werden. Hierbei wird nur der Jodidionenanteil am Gewicht des Jodids berücksichtigt.

Zu der wäßrigen Copolymerisatlösung gibt man die zu 100% komplementäre Menge Jod und Jodid in gelöster oder vorzugsweise fester Form. Das Äquivalentverhältnis Jod zu Jodid soll dabei 1,1:1 nicht überschreiten, sonst entsteht die Gefahr von Jodausscheidungen beim Verdünnen und/oder Lagern. Als Untergrenze wählt man ein Verhältnis von 0,2:1; eine Unterschreitung bringt bereits den Nachteil der schlechteren Löslichkeit. Bevorzugt wird ein Äquivalentverhältnis $J:J^{\ominus} = 0,8$ bis 1,1:1.

Als Jodidionen liefernde Jodsalze verwendet man zweckmäßigerweise die Alkalisalze, wie Natrium- und/oder Kaliumjodid. Auch Ammoniumjodid und andere Jodide sind selbstverständlich geeignet. Die Mischungstemperatur soll bei 0 bis 30°C, vorzugsweise 10 bis 25°C liegen; die Dauer des Lösevorganges liegt bei 30 Minuten bis 4 Stunden. So lange wird die Mischung zweckmäßig durch Rühren, Schütteln oder Taumeln in Bewegung gehalten.

Die Konzentration der Lösungen kann im Rahmen der Löslichkeit beliebig eingestellt werden. Je nach Zusammensetzung kann der Festgehalt bis zu 75 oder 80 Gewichtsprozent betragen.

Die so hergestellten Jodophore zeigen eine hervorragende Lagerstabilität auch unter extremen Bedingungen. So nimmt z.B. der Jodgehalt einer 1:20 verdünnten wäßrigen Lösung eines Jodophors aus einem Maleinsäure/Propylencopolymeren bei einer Lagerung von 15 Stunden bei 80°C, was einer Lagerzeit von ca. 2 Jahren bei Raumtemperatur entspricht, nur um 8% des Ausgangsjodgehaltes ab. Vergleichsweise beträgt der Jodverlust eines Polyacrylsäurejodkomplexes nach diesem Test 39%. Auch lassen sich die Jodophore ohne Entmischungserscheinungen beliebig mit Wasser verdünnen.

Die erfindungsgemäßen Jodophore sind zur Konfektionierung tensidfreier, schaumloser Desinfektionsmittel geeignet, die vor allem in Brauereien, Molkereien, der Landwirtschaft und im Krankenhausbereich verwendet werden. Solche Zubereitungen enthalten außer zusätzlichem Wasser vor allem Phosphorsäure und/oder niedere Alkohole, wie Isopropanol und/oder Glycole, wie Butyldiglycol, wobei solche Zubereitungen im allgemeinen 25 bis 150 ppm Wirksubstanz enthalten.

Geprüft wurden die Wasserverdünnbarkeit und der Jodverlust bei Lagerung einer verdünnten wäßrigen Jodophorlösung mit einem verfügbaren Jodgehalt von 1,0%, was einem Verdünnungsverhältnis Jodkomplex zu Wasser wie ca. 1:20 entspricht in einem Wärmeschrank von 80°C nach 15 Stunden. Die Angabe des Jod-Verlustes erfolgt in % berechnet auf den Ausgangswert. Die Temperatur von 80°C wurde aus meßtechnischen Gründen (kürzere Beobachtungszeit) gewählt.

Ferner wurde zu Vergleichszwecken ein Polyacrylsäurejodophor gemäß DE-A-27 10 497 geprüft.

Die folgenden Beispiele geben Herstellung und übliche Zubereitungen sowie die Prüfergebnisse wieder.

Teile und Prozente beziehen sich auf das Gewicht, soweit sie nicht anders bezeichnet sind, dabei verhalten sich Raumteile zu Gewichtsteilen wie Liter zu Kilogramm.

Beispiel 1

In einem 400 Raumteile fassenden Rührgefäß mit Blattrührer wurden bei 20°C der Reihe nach gegeben: 282 Teile einer 35 prozentigen Lösung eines alternierenden 1:1 Copolymerisats aus Maleinsäure und Methylvinyläther vom K-Wert 49, 117,5 Teile Kaliumjodid und 100 Teile elementares Jod. Das Gemisch wurde bei 150 UpM 2 Stunden bei Raumtemperatur gerührt. Es wurde eine tiefbraune, viskose Lösung mit einem Gehalt an 20,3 Gewichtsprozentigem aktivem Jod erhalten. Die Jodophorlösung ließ sich mit Wasser im Verhältnis 1:2, 1:20 und 1:20 verdünnen.

Der Jodverlust nach 15 Stunden bei 80°C betrug 32%.

Beispiel 2

Wie bei Beispiel 1 jedoch mit einem 1:1-Copolymerisat aus Maleinsäure und Äthylvinyläther vom K-Wert 32 als Komplexbildner.

Die Jodophorlösung ließ sich mit Wasser im Verhältnis 1:2, 1:20 und 1:200 ohne Jodausscheidung verdünnen.

Der Jodverlust nach 15 Stunden bei 80°C betrug 28%.

### Beispiel 3

Wie bei Biespiel 1 jedoch mit einem 1:1-Copolymerisat aus Maleinsäure und Äthylen von K-Wert 20 als Komplexbildner.

Die Jodophorlösung ließ sich mit Wasser im Verhältnis 1:2, 1:20 und 1:200 ohne Jodausscheidung verdünnen.

Der Jodverlust nach 15 Stunden bei 80°C betrug 23%.

### Beispiel 4

Wie bei Beispiel 1 jedoch mit einem 1:1-Copolymerisat aus Maleinsäure und Propylen vom K-Wert 27 als Komplexbildner.

Die Jodophorlösung ließ sich mit Wasser im Verhältnis 1:2, 1:20 und 1:200 ohne Jodausscheidung verdünnen.

Der Jodverlust nach 15 Stunden bei 80°C betrug 8%.

Vergliechbeispiel gemäß DE-A-27 10 437

In einem 200 Raumteile fassenden Rührkolben wurden bei 20°C der Reihe nach gegeben: 56,45 Teile 35-prozentige wäßrige Lösung einer Polyacrylsäure vom K-Wert 11, 23,55 Teile Kaliumjodid und 20 Teile elementares Jod. Nach einer Mischzeit von 45 Stunden bei 150 Upm war eine homogene Lösung mit einem Gehalt an aktivem Jod von 20 Gewichtsprozent entstanden. Die Jodophorlösung ließ sich im Verhältnis 1:2, 1:20 und 1:200 ohne Jodausscheidung verdünnen.

Der Jodverlust der 1:20 verdünnten Lösung nach 15 Stunden bei 80°C betrug 39%.

Hier zeigt sich zwar ebenfalls eine ausgezeichnete Verdünnbarkeit, doch muß dieses Jodophor wenn es nicht in konzentrierter Form gelagert wird wesentlich rascher verwendet werden.

### Patentansprüche

1. Verfahren zur Herstellung von Jodophoren durch Vermischen von wäßrigen Lösungen von polymeren Carboxylgruppen enthaltenden Polymerisaten mit elementarem Jod und Alkali- oder Ammoniumiodiden, *dadurch gekennzeichnet,* daß man — bezogen auf das Gewicht des Jodophoren — 14 bis 80% eines 1:1 Copolymerisats des K-Werts 8 bis 60 aus Maleinsäure und einem $C_1$- bis $C_4$-Alkylvinyläther oder einem $C_2$- bis $C_3$- -Olefin und 86 bis 20% einer Mischung aus Jod und Jodidionen im Äquivalentverhältnis von (0,2 bis 1,1):1 in einer zur vollständigen Lösung ausreichenden Mengen Wasser bei 0 bis 30°C miteinander vereinigt.

2. Verfahren nach Anspruch 1, *dadurch gekennzeichnet,* daß man Copolymerisate aus Maleinsäure und Methyl- oder Äthylvinyläther einsetzt.

3. Verfahren nach Anspruch 1, *dadurch gekennzeichnet,* daß man Copolymerisate aus Maleinsäure und Äthylen oder Propylen einsetzt.

4. Ein zur Lösung ausreichende Menge an Wasser enthaltende Lösung eines Jodkomplexes aus — bezogen auf Feststoff — 14 bis 80 Gewichtsprozent eines 1:1 Copolymerisats vom K-Wert 8 bis 60 aus Maleinsäure und einem $C_1$- bis $C_4$-Alkylvinyläther oder einem $C_2$- bis $C_3$-Olefin und 86 bis 20 Gweichtsprozent einer Mischung aus Jod und Jodidionen im Äquivalentverhältnis von 0,2 bis 1,1:1.

5. Lösung nach Anspruch 4, enthaltend einen Jodkomplex eines Copolymerisats aus Maleinsäure und Methyl- oder Äthylvinyläther.

6. Lösung nach Anspruch 4, enthaltend einen Jodkomplex eines Copolymerisats aus Maleinsäure und Äthylen oder Propylen.

## Claims

1. A process for the production of iodophores by mixing aqueous solutions of polymeric polymers containing carboxyl groups with elemental iodine and alkali metal or ammonium iodides, *characterized in that,* based on the weight of the iodophores, 14 to 80% of a 1:1 copolymer having a K value of 8 to 60 and derived from maleic acid and an alkyl vinyl ether with 1 to 4 carbon atoms in the alkyl, or an olefin of 2 or 3 carbon atoms, and 86 to 20% of a mixture of iodine and iodide ions in an equivalent ratio of 0.2 to 1.1:1 are combined at 0 to 30°C in a sufficient amount of water for complete dissolution.

2. A process as claimed in claim 1, *characterized in that* copolymers of maleic acid and methyl or ethyl vinyl ether are used.

3. A process as claimed in claim 1, *characterized in that* copolymers of maleic acid and ethylene or propylene are used.

4. A solution, containing a sufficient amount of water for dissolution, of an iodine complex of, based on solids, 14 to 80% by weight of a 1:1 copolymer having a K value of 8 to 60 and derived from maleic acid and an alkyl vinyl ether with 1 to 4 carbon atoms in the alkyl, or an olefin of 2 or 3 carbon atoms, and 86 to 20% by weight of a mixture of iodine and iodide ions in an equivalent ratio of 0.2 to 1.1:1.

5. A solution as claimed in claim 4, containing an iodine complex of a copolymer of maleic acid and methyl or ethyl vinyl ether.

6. A solution as claimed in claim 4, containing an iodine complex of a copolymer of maleic acid and ethylene or propylene.

## Revendications

1. Procédé de préparation de complexes de l'iode (iodophores) par mélange de solutions aqueuses de polymères à groupes carboxyle polymérisés avec de l'iode élémentaire et des iodures de métaux alcalins ou d'ammonium, caractérisé en ce que l'on mélange (proportions par rapport au poids de l'iodophore) 14 à 80% d'un copolymère 1:1 d'acide maléique et d'un éther alcoyl-vinylique en $C_1$ à $C_4$ ou d'une $\alpha$-oléfine en $C_2$ ou $C_3$, d'une valeur K de 8 à 60, et 86 à 20% d'un mélange d'iode et d'ions iodure avec un rapport des poids équivalents de 0,2:1 à 1,1:1 entre 0 et 30°C avec quantité d'eau suffisante pour leur dissolution complète.

2. Procédé suivant la revendication 1, caractérisé en ce que le copolymère employé est un copolymère d'acide maléique et d'éther méthyl-vinylique ou d'éther éthyl-vinylique.

3. Procédé suivant la revendication 1, caractérisé en ce que le copolymère employé est un copolymère d'acide maléique et d'éthylène ou de propylène.

4. Solution aqueuse d'un complexe de l'iode, contenant (pourcentages en poids par rapport à la matière solide) 14 à 80% d'un copolymère 1:1 d'acide maléique et d'un éther alcoyl-vinylique an $C_1$ à $C_4$ ou d'une $\alpha$-oléfine en $C_2$ ou $C_3$, d'une valeur K de 8 à 60, et 86 à 20% d'un mélange d'iode et d'ions iodure avec un rapport des poids équivalents de 0,2:1 à 1,1:1 dans une proportion suffisante d'eau pour assurer la dissolution complète des composants.

5. Solution suivant la revendication 4, contenant un complexe iodé d'un copolymère d'acide maléique et d'éther méthyl-vinylique ou d'éther éthyl-vinylique.

6. Solution suivant la revendication 4, contenant un complexe iodé d'un copolymère d'acide maléique et d'éthylène ou de propylène.